# EUROPEAN PATENT SPECIFICATION

(11) **EP 0 659 329 B1**
(45) Date of publication and mention of the grant of the patent: **23.06.1999**
(21) Application number: 93910515.1
(22) Date of filing: 10.05.1993
(51) Int. Cl.: H05B 37/02

(54) **AN ARRANGEMENT FOR ACTIVATING AND DEACTIVATING LIGHT GENERATING MEANS**
ANORDNUNG ZUM EIN- UND AUSSCHALTEN VON LICHTQUELLEN
SYSTEME D'ACTIVATION ET DE DESACTIVATION DE DISPOSITIFS DE PRODUCTION DE LUMIERE

(30) Priority: 12.05.1992 SE 9201493
(43) Date of publication of application: 28.06.1995
(73) Proprietor: EXTRONIC AB, S-135 48 Tyserö (SE)
(72) Inventor: DANELL, Dag, Erik, S-135 48 Tyresö (SE)
(74) Representative: Lindblom, Erik J.
(86) International application number: SE9300408
(87) International publication number: WO9323973

(56) References cited:
- EP-A- 0 093 810
- EP-A- 0 486 018
- DE-A- 3 534 277
- US-A- 4 223 304
- US-A- 4 344 071

## Description

### TECHNICAL FIELD

The present invention relates to an arrangement which in response to a first person entering a defined space in which one or more light-generating devices are installed will function to activate the light-generating device/devices in a "contactless fashion" and to deactivate said light-generating device/devices after a given time period has lapsed, preferably a predetermined time period, from the moment that said first person or a last person leaves said defined space.

The invention is based on the known technique of utilizing to this end sound-wave receiving means which will initiate activation of the light-generating device(s) upon detection of sound waves that lie within a predetermined first frequency band and converesely initiate deactivation of said light-generating device(s) in the absence of the detection of sound waves that lie within said frequency band.

### BACKGROUND ART

Several different "passive presence detection means" are known to the art and utilize different technical devices for their intended function.

One example is the use of detectors which sense passive infrared beams and which are adapted to detect the thermal energy that radiates from all warm-blooded creatures.

Another technique on which the present invention is based is one in which sound waves that occur within the defined space, preferably sound waves that are generated therein, are detected, including the levels of said sound waves.

In this regard, it is known to select from the frequency spectrum of the sound generated those freqencies which lie within a predetermined first frequency band and to activate the light-generating devices with the aid of an electrically operated a switch and thrcugh the medium of apropriately adapted filters and amplifiers.

The amplifier used includes time delay circuits which when the aforesaid sound waves have ceased to exist or lie beneath said first frequency band function to deactivate the light-generating devices after a given delay time has lapsed.

The following publications constitutes part of prior art.

Patent publication US-A-4 344 071 discloses an arrangement comprising sound-wave receiving means detecting sound-waves including the infrasonic wavelength, which operates to actuate a household lighting fixture in response to a sensed environmental condition such as sound or movement within a room.

Patent publication EP-A1-0 093 810 discloses an arrangement for contactless activating and deactivating light generating devices based upon the use of a sound-wave receiving means constructed to detect sound-waves including the subsonic wavelength as well as the supersonic wavelength. The last paragraph of page 6 in this publication mentions that a microprocessor with a specifically developed software can be implemented in order to omit background noise.

By "contactless" is meant that one or more light-generating devices are activated and deactivated without needing to manually operate a switch, even though such switches may be provided.

### SUMMARY OF THE INVENTION

### TECHNICAL PROBLEMS

When studying the present state of the art, it will be seen that a technical problem resides in the provisicn of an arrangement with which one or more light-generating devices installed in a defined space can be activated in a contactless fashion with the aid of one or only a few detectors even when the space monitored or guarded is large and extends throughout several stories of a building, with one or more doors to each storey and possibly also a lift or elevator shaft and a stairwell.

When reviewing the present standpoint of techniques as described above, it will be seen that primarily a technical problem resides in providing an arrangement by means of which one or more light-generating devices in a defined space can be activated in a contactless fashion immediately prior to the physical entrance of a first person into said defined space.

Another technical problem resides in the significance of refraining from the use of IR-detectors with their limitations of solely covering a limited part of the defined space and requiring a physical presence in the space before reacting.

Another technical problem resides in realizing which means are required in order to overcome those limitations which lie in the detection of solely those sound waves that are generated in the space within a first frequency band, in order to initiate activation of the light-generating devices.

Another technical problem is one of realizing the criteria required and capable of being applied beneficially in solving one or more of the aforesaid technical problems.

In addition, it will be seen that a technical problem resides in the ability of realizing the significance of detecting sound waves in the defined space within two mutually separate frequency bands, and the advantages afforded hereby.

A technical problem resides in the ability to select frequency limits for each of these frequency bands.

It will also be seen that a technical problem resides in the ability to realize those advantages that are obtained when detecting sound waves within an extremely low frequency band and/or instantaneous occurrent air pressure variations of low energy.

It will also be seen that a technical problem is one of realizing the significance of separating the first and the second frequency bands with such frequency limits that the major part of a frequency band relevant to the space concerned and representative of normal background noise will lie between these frequency bands and range limits.

A further technical problem is one of realizing the significance of choosing a first frequency band which is higher than 500 Hz, while a particular technical problem lies in selecting the second frequency band at very low frequency, preferably a frequency lower than 15 Hz, and more preferably a frequency lower than 5 Hz.

It will also be seen that a technical problem resides in realizing the significance of providing an arrangement in which the sound waves occurring within said second frequency band are instrumental in providing an activation time of said light-generating devices, also within a predetermined delay time.

It will also be seen that a technical problem is one of realizing the significance of allowing sound waves occurring within the first frequency band to provide an activation time of said light-generating devices within a predetermined delay time.

### SOLUTION

The present invention is based on an arrangement for activating one or more light-generating devices in a defined space, such as a stairwell, in a contactless fashion upon entry of a first person into said space, and to cause deactivation of said light-generating devices after said first person, or a last person, has left the space.

The detector used in accordance with the invention is a sound-wave receiving device, normally a microphone and a sound amplifier which is adapted to detect sound waves within a predetermined first frequency band and to initiate activation of the light-generating devices, and to initiate deactivation of said light-generating devices in the absence of the detection of sound waves within said frequency band.

In the case of an arrangement of this kind, it is now proposed in accordance with the invention that the sound-wave receiving device shall be adapted to detect sound waves that occur in the defined space at an extremely low frequency and/or solely an instantaneous variation in air pressure that lies within a predetermined small second frequency band.

According to proposed embodiments that lie within the scope of the present invention, it is proposed that the first and the second frequency bands are separated by a third frequency band representative of the background noise applicable to the space concerned.

It is also proposed that the first frequency band is higher than 500 Hz while the second frequency band is preferably lower than 15 Hz, preferably lower than 5 Hz.

According to another embodiment, activation based on the occurrence of sound waves that lie within the second frequency band will not only cause instantaneous activation of said light-generating device or devices, but also an activation time chosen within a predetermined delay time.

Similarly, activation based on sound waves occurrent within the first frequency will provide an activation time of said device or devices within a predetermined delay time, this activation time being controlled by the detection of sound waves that lie in the second frequency band.

Finally, according to another embodiment, a microphone unit is connected to a first preamplifier adapted to the first frequency band and a second preamplifier adapted to the second frequency band, said preamplifiers being connected via associated filter units to a control unit which functions to activate or deactivate one or more light-generating devices through the agency of known switch means.

### ADVANTAGES

Those advantages primarily afforded by an inventive arrangement reside in the ability to reduce the number of detectors required to guard over a large space which includes a plurality of entrances (such as a stairwell) while still enabling the light-generating devices to be activated immediately prior to a first person physically entering the defined space.

By primarily detecting sound waves which occur at extremely low frequencies, it will normally suffice to use one single detector for a large space, even though this space should extend over several stories of a building.

The primary characteristic features of an inventive arrangement are set forth in the characterizing clause of the following Claim 1.

### BRIEF DESCRIPTION OF THE DRAWINGS

A preferred exemplifying embodiment of an inventive arrangement and its application within a defined space will now be described in more detail with reference to the accompanying drawings, in which
- Figure 1: is a perspective view of part of a defined space, which has been simplified in order to better illustrate the application of the present invention;
- Figure 2: is a block schematic illustrating a detector unit in accordance with the present invention with an associated signal-time circuit;
- Figure 3: illustrates the orientation of a first and a second frequency band within which the invention is intended to operate; and
- Figure 4: is a block schematic illustrating a desired time delay.

### DESCRIPTION OF EXEMPLIFYING EMBODIMENTS AT PRESENT PREFERRED

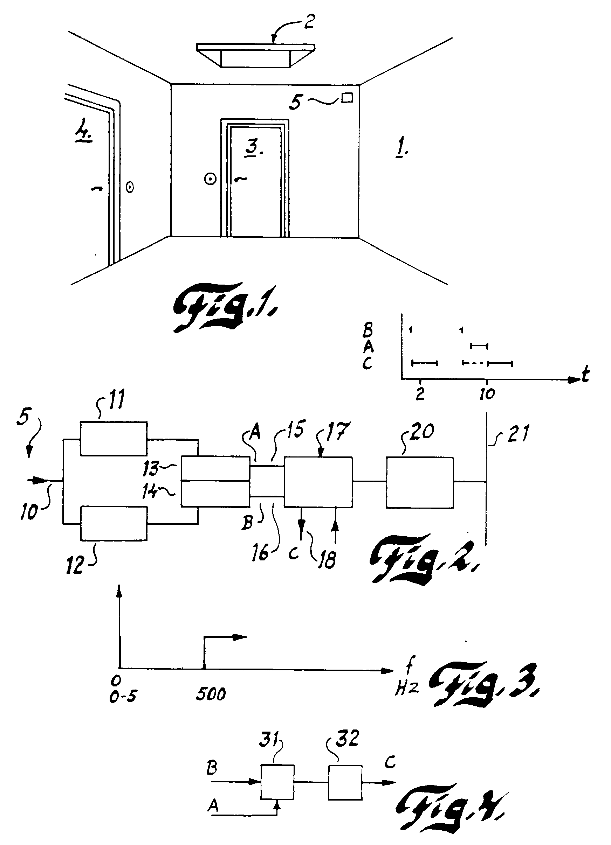

Figure 1 is a perspective view of part of a defined space 1 in which the present invention can be applied.

It will be understood, however, that the defined space illustrated in Figure 1 has been simplified to better illustrate the invention and that the invention can be applied equally as well in a defined space 1 of much larger area and of much greater complexity than the illustrated space. For instance, the space concerned may extend through several stories of a multi-storey building which includes a lift or elevator shaft and a stairwell, which may contain several doors on each storey or floor.

The invention thus relates to an arrangement for activating one or more light-generating devices 2, such as lamps, installed in a defined space 1 in a contactless fashion as a first person enters the defined space, for instance by opening a door 3, and for deactivating the light-generating device 2 after said first person, or a last person, has left the space 1 through a door 4 for instance.

To this end, there is fitted within said space a device or means 5 which detects and receives sound waves, preferably sound waves generating and occurring in said space, and which when detecting sound waves generated within the space 1 that lie within a predetermined first frequency band initiates activaticn of the light-generating device 2 through the agency of kncwn means, and which in the absence of sound waves that lie in said frequency band initiates deactivation of the light-generating device, normally after a predetermined period of time has lapsed.

The present invention is based on the ability of the scund-wave receiving device 5 to select and detect sound waves of extremely low frequency and/or solely instantaneous variations in air pressure.

Sound waves generated at an extremely low frequency shall occur within a predetermined narrow, second frequency band.

The device shall, in particular, evaluate those sound waves, or instantaneous variations in air pressure, which derive from a person preparing to enter the defined space, by opening a door or the like in a normal manner.

This action creates a sound wave or a variation in air pressure which is able to propagate through the room and be detected by the detecting device, almost irrespective of where the device is located in the space.

Figure 2 is a block schematic of an inventive arrangement, where an output from a microphone 10 is connected to a first preamplifier 11 and a second preamplifier 12.

The first preamplifier 11 is intended to amplify sound waves within a frequency band of from 50 Hz to 30 kHz, while the second preamplifier 12 is intended to amplify sound waves within a frequency band of from 0Hz to 5 Hz.

Both the first and the second preamplifier 11, 12 will preferably be adjustable to a predetermined detection level, said detection level normally being lower for the second preamplifier 12 than for the first preamplifier 11.

The first preamplifier 11 is connected to a first filter 13 and the second preamplifier 12 is connected to a second filter 14, said filters being connected to a control unit or logic unit 17 by respective conductors 15 and 16.

A signal "A" appears on the conductor 15 while a signal "B" appears on the conductor 16. These signals are processed in the control unit 17 in a manner described in more detail herebelow, resulting in a signal "C" on a conductor 18.

The embodiment illustrated in Figure 2 also uses a carrier frequency transmission facility 20 which enables signals occurring on the conductor 18 to be transmitted on a system of conductors 21, among other things.

Figure 3 illustrates the first and the second detectable frequency band, where the first frequency band is higher than 500 Hz and when applicable includes frequencies up to 10 kHz, and even higher.

The second frequency band does not only apply to an extremely low frequency but also to an adapted narrow frequency band, in the case of the illustrated embodiment a band of 0-5 Hz.

The principles of the invention are based on the fact that when a door to a defined space 1 is opened in a normal fashion, the door will generate a wandering variation in air pressure in the room, irrespective of whether the door is opened inwards or outwards. This variation in air pressure will thus be detected by the second preamplifier 12, which in response delivers a signal "B" to the control unit 17 via a filter 14.

This is illustrated in the time diagram.

The control unit 17 is constructed so that when a signal "B" occurs on the conductor 16, a signal "C" is produced on the conductor 18, this signal constituting a time delay signal of, for instance, 3 minutes. If no sound waves are generated within the first frequency band within the space 1, the light-generating devices are deactivated at the end of this time period.

It will be seen from the time diagram that a variation in air pressure is initiated on the conductor 16 by a signal "B" and that within the given time delay of 3 minutes, "2-minute sound waves", occur within the predetermined first frequency band, owing to the entry of a person into the space, and a signal "A" occurs on the conductor 15.

This signal "A" causes the control unit 17 to first effect the time delay initiated by the signal "B" when these sound waves cease.

The signal "C" on the conductor 18 can be transferred to a control means via a carrier frequency transfer facility, or can be applied directly to a control means which activates and deactivates the light-generating devices 2 through the medium of an electric switch.

Figure 3 is intended, in particular, to show that the first and the second frequency bands are separated by a third frequency band which is representative of the background noise occurring in the room or space.

It will be understood that this frequency band may vary in accordance with prevailing circumstances and also that the first frequency band may be narrower than that described on those occasions when particularly pronounced frequencies are generated within a narrow frequency band within the space 1.

When activation is effected with the aid of sound waves that lie within the second frequency band, the light-generating device or devices 2 is/are activated via the control unit 17 within a predetermined delay time, and when activation is effected by sound waves that lie in the first frequency band, the light-generating device or devices is/are activated within said predetermined delay time.

Figure 4 is a block schematic which illustrates how the signal "B" is applied so as to activate a control circuit 31 which, in turn, activates a circuit 32 for generating a signal within a predetermined time period after the occurrence of the signal "B".

The signal "A" is also applied to the control circuit 31 and at the end of the signal is intended to activate the occurrence of the corresponding signal "B" which activates the circuit 32 in the aforedescribed manner.

## Claims

1. An arrangement for activating at least one light-generating device (2) installed in a physically defined space (1) in a contactless fashion when a first person enters said space, and for deactivating said light-generating at least one device (2) when said first, or a last, person has left the space (1), said arrangement including sound-wave receiving means (5) which when detecting sound waves that lie within a predetermined first frequency band functions to activate said at least one light-generating device (2) and to initiate deactivation of said light-generating device when no sound waves that lie within said first frequency band are detected,
**characterized** in that the sound-wave receiving means (5) is constructed to detect sound waves appearing within said first frequency band, as well as within a second frequency band, where these two frequency bands are separated by a third frequency band which is representative of background noise, wherein no sound-waves are detected for activation or deactivation.

2. An arrangement according to Claim 1, **characterized** in that the first frequency band is higher than 500 Hz and the second frequency band is lower than 15 Hz, preferably lower than 5 Hz.

3. An arrangement according to Claim 1, **characterized** in that activation as a result of sound waves which lie in the second frequency band results in activation of said at least cne light-generating device (2) within a predetermined delay time.

4. An arrangement according to Claim 1 or 3, **characterized** in that activation of the at least one light-generating device (2) in response to sound waves which lie within the first frequency band is effected with an activation tine that lies within a predetermined delay time.

5. An arrangement according to Claim 1, **characterized** by a microphone unit (10) which is connected to a first preamplifier (11) adapted to the first frequency band and to a second preamplifier (12) adapted to the second frequency band, and in that the preamplifiers are connected to a control unit (17) through the medium of associated filter units (13, 14).

## Patentansprüche

1. Anordnung zur Aktivierung mindestens einer lichterzeugenden Einrichtung (2), die in einem physikalisch definierten Raum (1) kontaktlos installiert ist, wenn eine erste Person den Raum betritt, und zum Deaktivieren der mindestens einen lichterzeugenden Einrichtung (2), wenn die erste oder eine letzte Person den Raum (1) verlassen hat, wobei die Anordnung ein Schallwellen empfangendes Mittel (5) umfaßt, das bei Detektion von Schallwellen, die innerhalb eines vorbestimmten ersten Frequenzbandes liegen, die mindestens eine lichterzeugende Einrichtung (2) aktiviert und eine Deaktivierung der lichterzeugenden Einrichtung einleitet, wenn keine schallwellen innerhalb des ersten Frequenzbandes erfaßt werden, dadurch gekennzeichnet, daß das die Schallwellen empfangende Mittel (5) so ausgelegt ist, daß es Schallwellen detektiert, die innerhalb des ersten Frequenzbandes sowie innerhalb eines zweiten Frequenzbandes liegen, wobei diese zwei Frequenzbänder durch ein drittes Frequenzband getrennt sind, das repräsentativ für ein Hintergrundrauschen ist, in dem keine Schallwellen zur Aktivierung oder Deaktivierung detektiert werden.

2. Anordnung nach Anspruch 1, dadurch gekennzeichnet, daß das erste Frequenzband oberhalb von 500 Hz und das zweite Frequenzband unterhalb von 15 Hz, vorzugsweise unterhalb von 5 Hz liegt.

3. Anordnung nach Anspruch 1, dadurch gekennzeichnet, daß eine Aktivierung als Ergebnis von Schallwellen, die in dem zweiten Frequenzband liegen, zu einer Aktivierung der mindestens einen lichterzeugenden Einrichtung innerhalb einer vorbestimmten Verzögerungszeit führt.

4. Anordnung nach Anspruch 1 oder 3, dadurch gekennzeichnet, daß eine Aktivierung der mindestens einen lichterzeugenden Einrichtung (2) durch Schallwellen, die innerhalb des ersten Frequenzbandes liegen, mit einer Aktivierungszeit bewirkt wird, die innerhalb einer vorbestimmten Verzögerungszeit liegt.

5. Anordnung nach Anspruch 1, gekennzeichnet durch eine Mikrophoneinheit (10), die mit einem ersten, an das erste Frequenzband angepaßten Vorverstärker (11) und einem zweiten, an das zweite Frequenzband angepaßten vorverstärker (12) verbunden ist, wobei die Vorverstärker durch das Medium von zugeordneten Filtereinheiten (13, 14) mit einer Steuereinheit (17) verbunden sind.

## Revendications

1. Système pour activer, d'une manière sans contact, au moins un dispositif de production de lumière (2) installé dans un espace physiquement défini (1) lorsqu'une première personne pénètre dans cet espace, et pour désactiver le dispositif de production de lumière au moins unique (2) lorsque la première personne, ou un dernière personne, a quitté l'espace (1), le système comprenant des moyens de réception d'ondes sonores (5) qui, lorsqu'on détecte des ondes sonores se situant à l'intérieur d'une première bande de fréquences prédéterminée, fonctionnent pour activer le dispositif de production de lumière au moins unique (2) et pour déclencher la désactivation de ce dispositif de production de lumière lorsqu'on ne détecte pas d'ondes sonores se situant à l'intérieur de cette première bande de fréquences,
caractérisé en ce que
les moyens de réception d'ondes sonores (5) sont conçus pour détecter des ondes sonores apparaissant à l'intérieur de cette première bande de fréquences ainsi qu'à l'intérieur d'une seconde bande de fréquences, ces deux bandes de fréquences étant séparées par une troisième bande de fréquences qui est représentative du bruit de fond et dans laquelle on ne détecte pas d'ondes sonores pour l'activation ou la désactivation.

2. Système selon la revendication 1,
caractérisé en ce que
la première bande de fréquences est supérieure à 500 Hz, et la seconde bande de fréquences est inférieure à 15 Hz, de préférence inférieure à 5 Hz.

3. Système selon la revendication 1,
caractérisé en ce que
l'activation résultant du fait que des ondes sonores se trouvent à l'intérieur de la seconde bande de fréquences, conduit à l'activation du dispositif de reproduction de lumière au moins unique (2) à l'intérieur d'un temps de retard prédéterminé.

4. Système selon la revendication 1 ou 3,
caractérisé en ce que
l'activation du dispositif de production de lumière au moins unique (2) en réponse à des ondes sonores se trouvant à l'intérieur de la première bande de fréquences, est effectuée avec un temps d'activation se situant à l'intérieur d'un temps de retard prédéterminé.

5. Système selon la revendication 1,
caractérisé par
un bloc de microphone (10) connecté à un premier préamplificateur (11) adapté à la première bande de fréquences, et à un second préamplificateur (12) adapté à la seconde bande de fréquences, les deux préamplificateurs étant connectés à un bloc de commande (17) par l'intermédiaire de blocs de filtres associés (13, 14).
